Europäisches Patentamt

European Patent Office

Office européen des brevets

(19)

(11) Veröffentlichungsnummer: **0 250 907**
**A2**

(12) # EUROPÄISCHE PATENTANMELDUNG

(21) Anmeldenummer: **87108028.9**

(51) Int. Cl.4: **H02G 3/06**

(22) Anmeldetag: **03.06.87**

(30) Priorität: **25.06.86 DE 3621214**

(43) Veröffentlichungstag der Anmeldung:
**07.01.88 Patentblatt 88/01**

(84) Benannte Vertragsstaaten:
**AT CH DE FR GB LI SE**

(71) Anmelder: **Siemens Aktiengesellschaft Berlin und München**
**Wittelsbacherplatz 2**
**D-8000 München 2(DE)**

(72) Erfinder: **Scholtholt, Hans**
**Tannenstrasse 4**
**D-8044 Lohhof(DE)**
Erfinder: **Steiner, Ewald**
**Fichtenweg 11**
**D-8137 Berg 3(DE)**

(54) **Einrichtung zur Zugentlastung von Stegleitungen.**

(57) Zur Zugentlastung einer Stegleitung (1) an einem Gehäuseteil (2) wird ein dornartiger Isolierstoffzapfen (3) durch den Verbindungssteg (11) der Stegleitung (1) gestochen und in ein konisches Loch (8) des Gehäuseteiles (2) eingedrückt. Dadurch wird die Stegleitung (1) zugentlastet, ohne daß die Adern der Stegleitung (1) verformt werden.

FIG 1

EP 0 250 907 A2

## Einrichtung zur Zugentlasung von Stegleitungen

Die Erfindung bezieht sich auf eine Einrichtung zur Zugentlastung von mehradrigen elektrischen Stegleitungen an einem Gehäuseteil eines elektrischen Bauteiles oder Gerätes.

Es ist bekannt, elektrische Leitungen durch Klemmen an Gehäuseteilen festzulegen. Dabei können die Leitungen mäanderförmig gebogen und an den Gehäuseteilen mehrfach umgelenkt sein, um die Reibungskräfte zu erhöhen.

Stegleitungen von großem Durchmesser und hartem Kern lassen sich nur schwer biegen.

Der Erfindung liegt die Aufgabe zugrunde, eine einfache Zugentlastung zu schaffen, bei der die Stegleitung ohne hohen Zeitaufwand · festgelegt werden kann und die einen gestreckten Drahtverlauf ermöglicht.

Diese Aufgabe wird durch die Erfindung gemäß Anspruch 1 gelöst. Derartige Stegleitungen dienen z.B. als Verbindungsleitungen zwischen Telefonanlagen und Freileitungsmasten. Diese Stegleitungen haben Kerne von erhöhter Festigkeit und erhöhtem Querschnitt. Ein Verbiegen der Leitungen oder ein zu festes Einklemmen vergrößert wegen der höheren Sprödigkeit die Bruchgefahr. Der dornartige Isolierstoffzapfen stellt ein einfaches Teil dar. Das Einstechen in den Verbindungssteg ist ein einfacher geradliniger Vorgang, der mit einem einfachen Werkzeug durchgeführt werden kann. Die Zugentlastung wirkt sich dabei nicht oder allenfalls geringfügig auf den Drahtkern aus. Vorteilhafte Weiterbildungen der Erfindung sind in den Ansprüchen 2 bis 7 gekennzeichnet:

Der runde Querschnitt des Isolierstoffzapfens nach Anspruch 2 läßt sich einfach herstellen. Es werden scharfe Einschnitte in den Steg vermieden, was die Gefahr des Aufreißens der Isolation verringert.

Die Weiterbildung nach Anspruch 3 läßt sich besonders kostengünstig verwirklichen. Beim Festlegen der Leitung wird diese zunächst über den Dorn gelegt und gegen dessen Fuß gedrückt. Dabei durchsticht dieser die Isolation, so daß die Leitung gegen longitudinalen Zug gesichert ist. Der Dorn kann Querrippen aufweisen, die ein Herausziehen der Leitung erschweren.

Durch die Weiterbildung nach Anspruch 4 ist es möglich, die Leitung zunächst lagerichtig auf das Gehäuseteil aufzulegen und sodann durch Einstechen des Isolierstoffzapfens zu fixieren.

Durch die Weiterbildung nach Anspruch 5 legt sich der verbreitete Fuß des Zapfens flach über die Stegleitung, so daß diese auch in der Längsrichtung des Zapfens sicher gehalten ist.

Die Weiterbildung nach Anspruch 6 ermöglicht es, die Zapfen bereits werkseitig an dem Gehäuse lose zu fixieren. Beim Befestigen der Stegleitung befindet sich der Isolierstoffzapfen bereits in der richtigen Lage, so daß er lediglich durch eine einfache Hubbewegung in den Verbindungssteg eingedrückt wird.

Durch die Weiterbildung nach Anspruch 7 können mehrere Stegleitungen parallel nebeneinander an der Anschlußleiste befestigt werden. Da der Isolierstoffzapfen eine geringe Breite aufweisen kann, ist es möglich, z.b. zwei adrige Stegleitungen einzeln und eng benachbart an der Anschlußleiste zu befestigen.

Im folgenden wird die Erfindung anhand eines in der Zeichnung dargestellten Ausführungsbeispieles näher erläutert:

Fig. 1 zeigt einen Schnitt durch ein Gehäuseteil einer Anschlußleiste für Stegleitungen mit einem Isolierstoffzapfen und einer Stegleitung,

Fig. 2 einen Schnitt durch die Teile nach Fig. 1 entlang der Linie II-II in Fig. 1, wobei eine benachbarte Stegleitung in einer späteren Montagephase dargestellt ist,

Fig. 3 einen Schnitt durch die Teile nach Fig. 2 entlang der Linie III-III in Fig. 2.

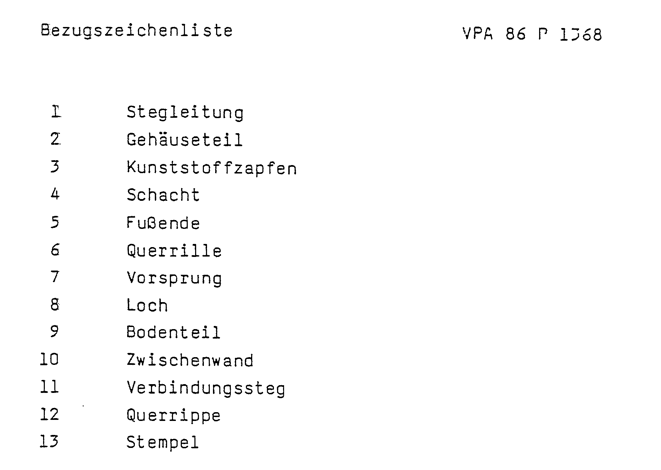

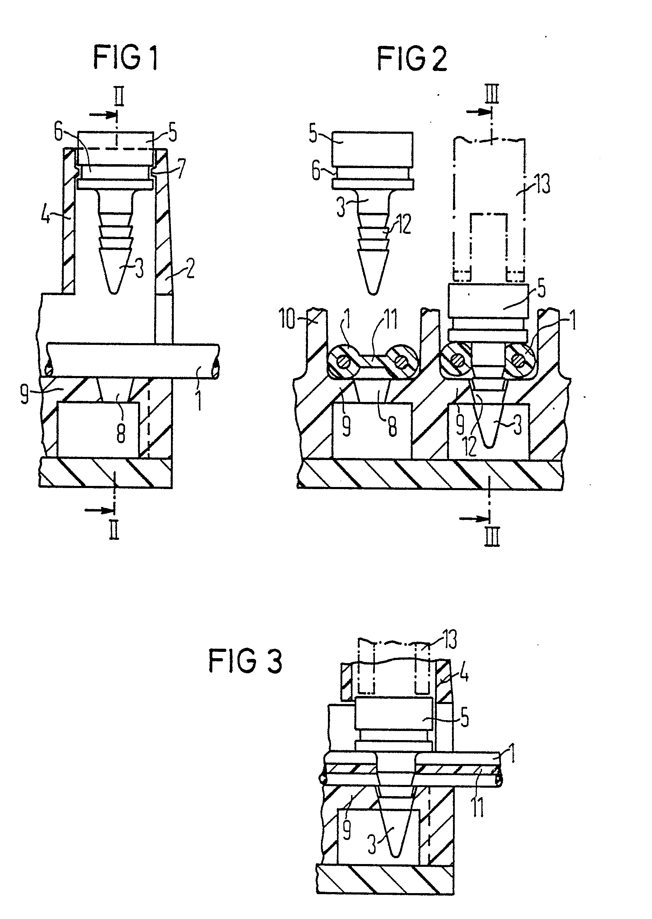

Nach Fig. 1 ist eine Stegleitung 1 in ein Gehäuseteil 2 einer Anschlußleiste für die Stegleitungen 1 eingelegt. Ein dornartig zugespitzter Kunststoffzapfen 3 ist in einem Schacht über der Stegleitung 1 gehalten. Dabei weist die Spitze des Isolierstoffzapfens 3 auf die Stegleitung 1. Der Isolierstoffzapfen 3 weist ein verbreitetes Fußende 5 auf, in das eine Querrille 6 eingelassen ist. In diese greift ein nockenartiger Vorsprung 7 des Schachtes 4 ein, so daß der Isolierstoffzapfen 3 in einer definierten Lage gehalten wird. Dabei ist die Spitze des Isolierstoffzapfens 3 auf ein konisches Loch 8 in einem Bodenteil 9 des Gehäuseteiles 2 gerichtet.

Die linke Seite der Fig. 2 zeigt eine andere Ansicht der Teile nach Fig. 1. Die zweiadrige Stegleitung 1 liegt zwischen zwei Zwischenwänden 10 des Gehäuseteiles 2 zentrisch über dem konischen Loch 8 des Bodenteiles 9 auf. Das Loch 8 erweitert sich zum Isolierstoffzapfen 3 hin.

In der rechten Hälfte der Fig. 2 und in Fig. 3 sind die Teile in ihrer Endstellung dargestellt. Der Isolierstoffzapfen 3 ist mit seiner Spitze durch den Verbindungssteg 11 der Stegleitung 1 gestochen und in das konische Loch 8 des Bodenteiles 9 eingedrückt. Der Isolierstoffzapfen 3 ist mit umlaufenden Querrippen versehen, die sich zur Spitze hin verjüngen. Dabei ist der größte Durchmesser der Querrippen 12 etwas größer als der engste Durchmesser des konischen Loches 8. Beim Eindrücken des Isolierstoffzapfens 3 in das konische Loch 8 geben die Teile gegenseitig elastisch nach. Der Isolierstoffzapfen 3 wird so weit durch das Loch hindurchgedrückt, bis das verbreitete Fußende 5 an der Stegleitung 1 anliegt. Eine der Querrippen hintergreift dann das Bodenteil 9, so daß der Isolierstoffzapfen 3 fest in dem Loch gehalten wird. Mehrere übereinander angeordnete Querrippen 12 ermöglichen es, Stegleitungen unterschiedlicher Dicke zu befestigen.

Das Herunterdrücken des Isolierstoffzapfens 3 aus seiner Raststellung in dem Schacht 4 kann z.B. mittels eines strichpunktiert angedeuteten Stempels 13 erfolgen. Dabei bilder der Schacht 4 eine Führung für das verlängerte Fußteil 5, so daß der Isolierstoffzapfen 3 ohne Schwierigkeiten das konische Loch 8 im Bodenteil 9 treffen kann.

## Ansprüche

1. Einrichtung zur Zugentlastung von mehradrigen elektrischen Stegleitungen an einem Gehäuseteil eines elektrischen Bauteiles oder Gerätes,
**dadurch gekennzeichnet** ,
daß ein dornartiger Isolierstoffzapfen (3) transversal durch einen Verbindungssteg (11) der Stegleitung (19 gestochen und an dem Gehäuseteil (2) befestigt ist.

2. Einrichtung nach Anspruch 1,
**dadurch gekennzeichnet,**
daß der Isolierstoffzapfen (3) im Bereich des Verbindungssteges (11) einen runden Querschnitt aufweist.

3. Einrichtung nach Anspruch 1 oder 2,
**dadurch gekennzeichnet,**
daß der Isolierstoffzapfen an dem Gehäuseteil angespritzt ist.

4. Einrichtung nach Anspruch 1 oder 2,
**dadurch gekennzeichnet,**
daß der Isolierstoffzapfen (3) als separates Element ausgebildet und klemmend in ein z.B. konisches Loch (8) des Gehäuseteiles (2) eingesetzt ist und in diesem Bereich mit widerhakenartigen Querrippen (12) versehen ist.

5. Einrichtung nach Anspruch 1, 2 oder 4,
**dadurch gekennzeichnet,**
daß der Isolierstoffzapfen (3) über der Stegleitung ein stufenförmig verbreitertes Fußteil (5) aufweist.

6. Einrichtung nach Anspruch 5,
**dadurch gekennzeichnet,**
daß der Isolierstoffzapfen (3) in seinem Fußteil (5) zumindest eine Querrille (6) aufweist und vor dem Durchstechen des Verbindungssteges (11) in einem Halteschacht (4) des Gehäuseteiles (2) fixiert ist, der mit zumindest einer nockenartigen Erhebung (7) in die Querrille (6) hineinragt.

7. Einrichtung nach einem der vorhergehenden Ansprüche, **dadurch gekennzeichnet,**
daß das Gehäuseteil (2) als Grundkörper einer mehrpoligen Anschlußleiste für die Stegleitungen (1) ausgebildet ist.

Bezugszeichenliste                    VPA 86 P 1368


    1       Stegleitung
    2       Gehäuseteil
    3       Kunststoffzapfen
    4       Schacht
    5       Fußende
    6       Querrille
    7       Vorsprung
    8       Loch
    9       Bodenteil
   10       Zwischenwand
   11       Verbindungssteg
   12       Querrippe
   13       Stempel

FIG 1

FIG 2

FIG 3